# EUROPEAN PATENT APPLICATION

(11) **EP 1 969 914 A1**
(43) Date of publication of application: **17.09.2008**
(21) Application number: 08152665.9
(22) Date of filing: 12.03.2008
(51) Int. Cl.: A01B 21/08, A01B 35/16

(54) **Soil loosening apparatus**

(30) Priority: 12.03.2007 GB 0704812
(71) Applicant: R.J & R.J. Clay & Co., Showle Court, Monkhide Ledbury, Herefordshire Ledbury Hereford and Worcester HR8 2TX (GB)
(72) Inventor: Clay, Roger F., Ledbury, Hereford and Worcester HR8 2TX (GB)
(74) Representative: Gaunt, Thomas Derrick

(57) **Abstract**

Apparatus for loosening soil (1) and, in particular, an apparatus for alleviating soil compaction in an area land. The apparatus comprises a frame (5) for moving over the area of soil and a plurality of rotors (2) rotatably mounted on the frame (5) for engaging the soil surface as the frame (5) is moved over said area. Each of the rotors (2) has a plurality of blades configured for driving into the soil as the rotor rotates and for supporting an adjacent section of soil. Each rotor is mounted so as to rotate about an individual axis, with axes of adjacent rotors being substantially parallel and inclined to the soil surface such that, in use, each blade exerts a lifting force on the soil section above the blade as it is driven into the soil.

## Description

The present invention concerns a soil loosening apparatus, and in particular an apparatus for alleviating soil compaction in an area land for use in conjunction with other "no-till" practices.

Since ancient times tillage has been the prerequisite of successful crop establishment and production, providing a weed free and sufficiently loose soil in which seeds can successfully germinate and initially take root. Traditionally, mouldboard ploughs were used for this purpose, which function to completely invert the soil, exposing furrow slices to easily accept the incoming crop.

Ploughing, however, leaves organic matter in the soil at risk through oxidation as the ground is loosened and turned. This leaves the soil open to erosion through wind and water, leading to the loss of organic matter and hence reduced fertility. In this regard, intensive ploughing practices and mono-culture, particularly in the dryer climates of the Americas and Australasia, have lead to serious soil erosion problems. These problems have historically been less pronounced in Northern Europe due to the relatively damp climate. However, recently there has been growing awareness of the problems associated with soil erosion and the need to develop more sustainable agriculture practices.

The above factors have prompted a rethink of tillage practice, which has lead to the introduction of so-called "conservation tillage". In this connection, conservation tillage involves the implementation of various practices which seek to enhance natural biological processes and maintain soil cover. For example, such practices include the introduction of tine and disc implements which leave much of the previous crop residue on the soil surface which acts as a barrier to erosion.

Further developments have involved the introduction of devices capable of placing seed directly into uncultivated ground; a practice which has become known as "no-till". In some cases it has been shown that after several years of non-cultivation, no-till practices achieved superior soil structure and organic matter levels compared to continuously ploughed land. However, the number of successful cases has been far outweighed by the number of failures, and successful cases tend to be limited to situations where the land contained more stable soil types. The failure of no-till practices has been generally attributed to compaction of the soil, leading to uncertain seed germination, and generally poor root growth. These problems are not easy to solve without recourse to at least some degree of cultivation.

This has lead to the compromise of "min-till", or minimal tillage practices, which are currently the most popular alternative to traditional ploughing. "Min-till" often involves the use of tined or disc implements usually operating at shallower depths than conventional plowing to create a tilth and incorporate residues. Deeper working (250mm or more) tined implements which loosen soil without undue disturbance are in general use. However, such implements are less effective at shallow level loosening. This upper soil layer is particularly important for successful seed germination. In this regard, at shallow levels, such tined implements cause a high level of surface disturbance due to uncontrollable shearing and crumbling of the upper soil layers, which can contribute to soil erosion.

Further implements in common usage are slit-aeration devices. These devices involve rows of teeth mounted radially on a common shaft which rotates as the machine moves forward. As the machine is drawn across the soil, the teeth cut slits into the soil surface which act as aeration holes. However, these machines are only useful on grassland where there is an actively growing root structure to exploit the slits that are created.

Accordingly, despite some clear agronomic benefits, due to the above discussed problems, uptake of "no-till" practices globally is patchy, and in the UK and Europe, almost insignificant. Nevertheless, addressing the problem of soil erosion and maintaining high fertility rates is of increasing importance.

Therefore it is an object of the present invention to seek to provide a device capable of forming better conditions for seed germination and root growth in the upper soil layer, whilst causing minimal disturbance to the soil surface, and to thereby make "no-till" practices more certain of success.

According to a first aspect of the present invention, there is provided an apparatus for loosening soil, said apparatus comprising:- a frame for moving over an area of soil; a plurality of rotors rotatably mounted on the frame for engaging the soil surface as the frame is moved over said area, each rotor having a plurality of blades configured for driving into the soil as the rotor rotates and for supporting an adjacent section of soil; wherein each rotor is mounted so as to rotate about an individual axis, said axes of adjacent rotors being substantially parallel and being inclined to the soil surface such that, in use, each blade exerts a lifting force on the soil section above the blade as it is driven into the soil.

In this way, each blade undercuts and lifts a section of soil. This loosens the soil by causing it to fissure along natural weak points in the soil structure, thereby alleviating compaction in the upper soil layer to provide better conditions for seed germination and root growth. At the same time, because the section of soil is supported by the blade, the soil structure remains in tact and the soil is not inverted. This helps to maintain organic matter in the upper soil layer, which acts as a barrier to soil erosion.

Conveniently, the blades are spaced about the circumference of each rotor such that soil unsupported between the blades tends to fissure. In this way, the uplifting effect of the blades is applied at spaced intervals along the soil surface, leading to fissure in the unsupported soil sections there between.

Conveniently, each rotor comprises a mounting wheel to which the plurality of blades are mounted. In this way, individual blades can be replaced if they become damaged.

Conveniently, the axis of each rotor is inclined at an angle in the range of 15 to 30 degrees to the soil surface and, preferably, the angle is about 21 degrees to the soil surface. These angles have been shown to be particularly effective at loosening the upper soil layer.

Conveniently, each rotor has a diameter in the range of 600mm to 800mm and, preferably, the diameter is about 700mm. These diameters have been shown to be particularly effective for loosening the upper soil layer in agricultural land.

Conveniently, each of said blades is shaped to have a substantially constant width along its length, and preferably is substantially rectangular. These configurations allow the blade to effectively undercut a section of soil during each cutting action, to thereby loosen the soil whilst keeping the soil surface in tact.

Conveniently, each blade has a width in the range of 75mm to 85mm, and each blade has a width of about 77mm. These widths have been found to be particularly effective.

Conveniently, the ratio of the diameter of each rotor and the width of each blade is in the range of 8-10. These ratios have been found to be particularly effective.

Conveniently, a plurality of rotors are provided, the rotors being mounted on said frame such that, in use, they are distributed over a width transverse to the direction of travel of the frame. In this way, a wider area of soil can be worked with each pass of the apparatus.

Conveniently, the rotors are configured such that, in use, each blade cuts down to a depth in the range of 100mm to 200mm below the soil surface and, preferably to the depth of about 150mm below the soil surface. These depths correspond to the approximate depth to which existing crop residues grow. Therefore the apparatus acts to loosen the soil up to this depth in order to maintain this residue whilst improving conditions for seed germination.

Conveniently, the apparatus further comprises a second plurality of rotors rotatably mounted on the frame; wherein the individual axes of adjacent rotors in the second plurality of rotors are substantially parallel with one another and divergent with respect to the individual axes of the first plurality of rotors.

According to a further aspect of the present invention, there is provided an apparatus for loosening soil, said apparatus comprising:- a rotor having a plurality of substantially rectangular blades for insertion into the soil, the rotor being mounted for inclined rotation relative to the soil surface; where blades are spaced such that, in use, an uplifting force is applied at spaced intervals to the soil above the inserted blades.

In this way, the blades undercut and lift sections of soil at spaced intervals along the soil surface. This loosens the soil by causing it to fissure along natural weak points in the soil structure between the uplifted sections. This alleviates compaction in the upper soil layer to provide better conditions for seed germination and root growth, as well as maintaining the existing soil structure and organic matter.

An example of the present invention will now be described with reference to the accompanying drawings in which:-
Figure 1 shows the rear section of a soil loosening apparatus according to an illustrative embodiment of the present invention;
Figure 2 shows schematic representation of a side view of a soil loosening rotor according to an embodiment of the present invention;
Figure 3 shows schematic representation of a end view of two soil loosening rotors according to an embodiment of the present invention; and
Figure 4 shows a sectioned perspective view of a layer of soil treated by an apparatus according to an embodiment of the present invention.

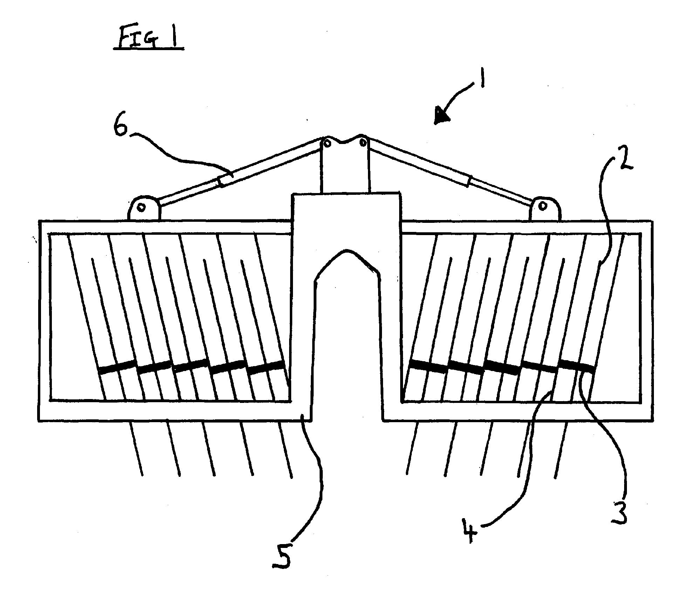

Figure 1 shows the rear section 1 of a soil loosening apparatus according to an illustrative embodiment of the present invention. The rear section 1 is of the type that can be drawn behind a tractor or the like over an area of soil. The apparatus comprises a main frame 5 which supports a plurality of angled rotors 2. Each of the rotors 2 comprises a plurality of blades (not shown) spaced around its circumference, as described below. Each of the rotors is spaced 250mm apart from the adjacent rotor in a side-by-side configuration, such that the apparatus has a working width transverse to the direction in which it is moved.

Each of rotors 2 is provided on a free turning axle 3 which is angled such that the rotor 2 rotates about an axis inclined to the soil surface. The axle 3 is supported on a bearing by bearing support 4 provided on the main frame 5, so that the rotor 2 is aligned parallel to the direction of travel. Furthermore, as can be seen, the rotors 2 are divided into two groups, with adjacent rotors 2 within each group having parallel axes of rotation.

In use, the apparatus 1 is lowered such that the blades provided on rotor 2 engage and penetrate into the surface of the ground. As the apparatus 1 is drawn along, the rotors 2 rotate or roll along the soil, driven by their engagement therewith, such that successive blades provided on the rotors penetrate into the soil. Retraction arms 6, which may be, for example, pneumatic or hydraulic, are provided to withdraw the rotors 2 from the soil surface to allow the apparatus 1 to be moved without engagement with the ground when not in use.

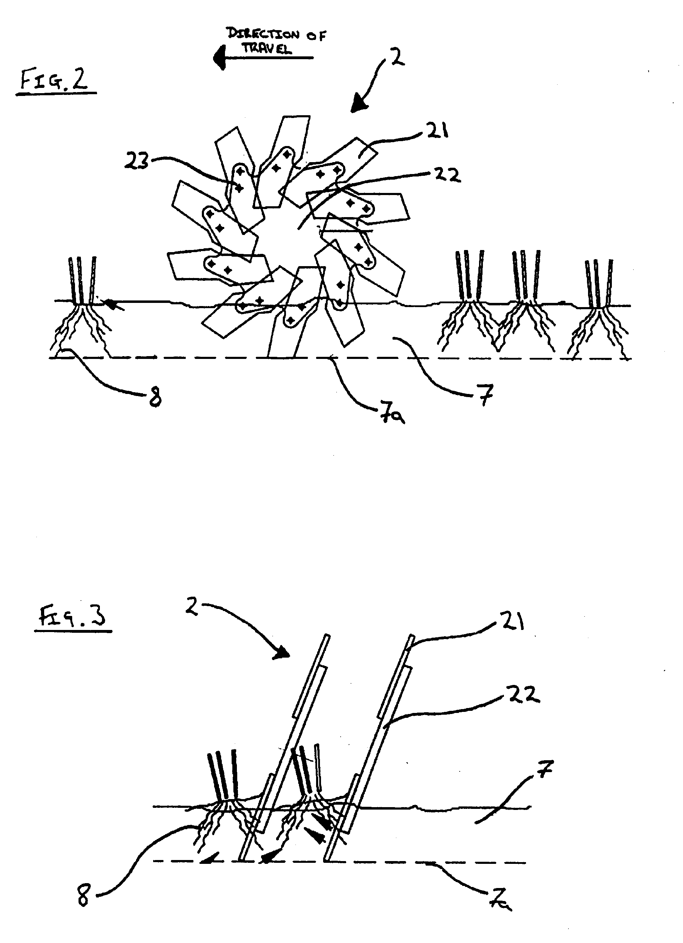

The operation of each rotor 2 will now be described with reference to Figures 2 and 3.

In this connection, Figure 2 shows schematic representation of a side view of a soil loosening rotor 26 according to an embodiment of the present invention. The features of the main frame 5 and the other rotors shown in Figure 1 have been omitted for clarity.

The rotor 2 comprises a plurality of blades 21 mounted on a mounting wheel 22. The blades 21 are connected to the mounting wheel 22 via mounting bolts 23, which allow individual blades to be removed and replaced if necessary, for example if a particular blade were to be damaged. Each blade 21 is profiled to enter and cut into the ground 7 as the rotor 2 rotates. The blades 21 have a constant width throughout their length and are substantially rectangular which allows the blade to support a section of soil above it, as will be described later. At their deepest, the blades 21 penetrate into the soil surface to a predetermined working depth 7a. This working depth corresponds approximately to the depth of the upper soil layer which contains the roots 8 of any stubble or residue from previous crops, and is typically in the region of up to 150mm deep.

As the rotor 2 is drawn in the direction of travel indicated in Figure 2, the rotor 2 rotates causing blades 21 sequentially to enter the soil and to cut down to the working depth 7a.

Figure 3 shows schematic representation of an end view of two soil loosening rotors 2 like that shown in Figure 2. As rotor 2 rotates over the surface of the soil, each blade 21 is successively planted into the soil and then driven deeper into the soil as the rotor 2 passes over it, until it reaches the rotor's bottom dead centre at which point the blade 21 is at its deepest. From here, the blade 21 moves upwardly as the rotor continues to rotate.

As the rotor 2 rotates about an axis inclined to the soil surface, each blade 21 enters and cuts into the soil at an angle. The wide shape of each blade 21 and this angle means that the blade undercuts a section of soil as it is driven deeper during the cut. This forces the soil surrounding the blade 21 to the sides as it is driven deeper. As such, the section of soil above the blade is forced upwardly in an uplifting action, leading to tension in the soil between this section and the surrounding soil. In turn, this leads to fissure along natural lines in the soil, resulting in the soil being loosened as it separates.

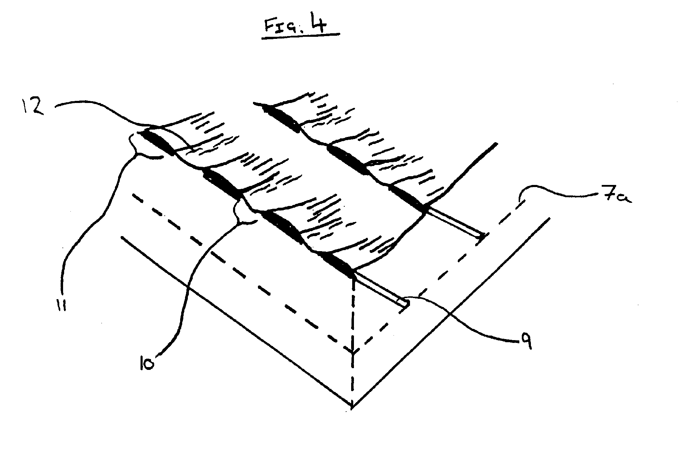

In this regard, Figure 4 shows a sectioned perspective view of a layer of soil treated by an apparatus according to an embodiment of the present invention. As can be seen, each rotor produces a row of slots 9 formed by its blades, with each slot extending down to working depth 7a. The slots 9 in each row are spaced at regular intervals and are parallel to the direction of travel of the apparatus. Above each of the slots 9 is a section of soil 11 which has been subjected to a lifting force by the blades, as described above. In-between each of these sections 11 are sections 10 which correspond to the spaces between the blades on each rotor, and hence have not been uplifted. Accordingly, fissure has occurred along natural lines 12 between the sections 11 and 10, due to tension there between, resulting in loosening of the soil.

As described above, the upper layer of soil, i.e. above the working depth of the apparatus 7a, is loosened as sections of soil supported by the blades are lifted. The wide blade configuration is important as it functions to undercut and lift a section of soil as the rotor 2 rotates, rather than simply penetrating into it. As such, the blade supports the section of soil as it is lifted preventing a disintegration or crumbling of its structure. This means that the surface layer of the soil is kept in tact and not overturned or sheared. Furthermore, as the blades 21 move through a constant plane, i.e. the plane of rotation of the rotor, and hence enter and exit the soil at the same angle, minimal disturbance is caused to the soil surface as the blade penetrates into the soil.

Due to the above, any stubble or residue remaining from previous crops in the upper layer of soil, which act as a barrier to erosion, are left substantially undisturbed. At the same time compaction in the soil layer caused by the passage of machinery or natural slumpage of the soil between crop cycles is alleviated.

It will also be appreciated that each blade 21 cuts into the upper soil layer up to a controllable predetermined working depth which is dependant on the size and configuration of the rotors 2 and blades 21. Furthermore, the blade 21 cuts into the upper soil layer as a progressive action as the rotor 2 rotates over the soil surface. As such, each cut is formed in a controlled manner dependant on the speed at which the frame 5 is drawn across the soil. Advantageously, this means that the cuts are formed in a consistent and controllable way regardless of soil conditions, such as moisture content. The apparatus of the present invention is therefore able to provide a consistent loosening action up to a controllable predetermined depth, even in different soil conditions, such as hard or boggy soil.

In addition to the loosening action of the apparatus, it has also been found that the slots 9 formed by the blades cutting into the soil allow for rain or irrigation to easily penetrate the soil surface. This improves the water storage capacity of the soil, which can aid seed germination, as well as reducing run-off volumes and surface ponding, and hence loss through evaporation, thereby helping to conserve water.

The present invention therefore provides a soil loosening device capable of relieving compaction from the upper layer of topsoil without disturbing the existing soil structure or disturbing any growing vegetation (e.g. in permanent grassland) or residues from previous crops.

The configuration of the rotors 2 and the blades 21 is important to the operation of the present invention. Preferably, the angle by which the rotors 2 are inclined is in the range of 15 to 30 degrees, and is more preferably about 21 degrees. Moreover, preferably the diameter of each of the rotors is in the range of 600mm to 800mm, and is preferably about 700mm. Furthermore, as discussed above blades are shaped to have a substantially constant width along their length. Preferably, the blade width is in the range of 75mm to 85mm, and more preferably of about 77mm. In this regard, the ratio between the diameter of the rotor and the width of each blade is preferably in the range of 8 to 10. For example, in a preferred embodiment the ratio is about 9, for example where the rotor diameter is 700mm and the blade width is 77mm.

It will be understood that the illustrated embodiment described herein shows an application of the invention in one form only for the purposes of illustration. In practice the invention may be applied to many different configurations the detailed embodiments being straightforward to those skilled in the art to implement.

For example, it will be understood that the blades may be formed integrally with the rotor.

It will also be understood that different numbers of rotor assemblies can be mounted onto a suitable frame to form loosening apparatus of varying widths. Furthermore, such a apparatus could be mounted onto the linkage arm of a tractor, alternatively, be provided with its own wheeled chassis and towed, or suitably harnessed to animal power. The apparatus of the present invention could also be used in conjunction with other devices such as, for example, a seeder unit and coulter system. Accordingly a complete "no-till" system could be formed, whereby a seed is placed into the ground in the wake of the soil loosening apparatus of the present invention.

Moreover, a lighter version of the device could also be employed for non-farm use, such as on golf courses or sports fields. In this way, compaction and natural slumpage of these surfaces could be alleviated to improve their quality.

It has also be found, that the present invention also has applications on ploughed land. In this regard, testing has shown that the undercutting and lifting action of the blades creates a good quality seedbed on ploughed land.

## Claims

1. Apparatus for loosening soil, said apparatus comprising:-
a frame for moving over an area of soil;
a plurality of rotors rotatably mounted on the frame for engaging the soil surface as the frame is moved over said area, each rotor having a plurality of blades configured for driving into the soil as the rotor rotates and for supporting an adjacent section of soil;
wherein each rotor is mounted so as to rotate about an individual axis, said axes of adjacent rotors being substantially parallel and being inclined to the soil surface such that, in use, each blade exerts a lifting force on the soil section above the blade as it is driven into the soil.

2. An apparatus according to claim 1 wherein said blades are spaced about the circumference of each rotor such that soil unsupported between the blades tends to fissure.

3. An apparatus according to claim 1 or 2 wherein each rotor comprises a mounting wheel to which the plurality of blades are mounted.

4. An apparatus according to any preceding claim wherein the axis of each rotor is inclined at an angle in the range of 15 to 30 degrees to the soil surface.

5. An apparatus according to claim 4 wherein the angle is about 21 degrees to the soil surface.

6. An apparatus according to any preceding claim wherein each rotor has a diameter in the range of 600mm to 800mm.

7. An apparatus according to claim 6 wherein the diameter is about 700mm.

8. An apparatus according to any preceding claim wherein each of said blades is shaped to have a substantially constant width along its length.

9. An apparatus according to any preceding claim wherein each of said blades is substantially rectangular.

10. An apparatus according to claim 8 or 9 wherein each blade has a width in the range of 75mm to 85mm.

11. An apparatus according to claim 10 wherein each blade has a width of about 77mm.

12. An apparatus according to any preceding claim wherein the ratio of the diameter of each rotor and the width of each blade is in the range of 8-10.

13. An apparatus according to any preceding claim wherein a plurality of rotors are provided, the rotors being mounted on said frame such that, in use, they are distributed over a width transverse to the direction of travel of the frame.

14. An apparatus according to any preceding claim wherein the the rotors are configured such that, in use, each blade cuts down to a depth in the range of 100mm to 200mm below the soil surface.

15. An apparatus according to claim 14 wherein each blade cuts down to the depth of about 150mm below the soil surface.

16. An apparatus according to any preceding claim further comprising a second plurality of rotors rotatably mounted on the frame;
wherein the individual axes of adjacent rotors in the second plurality of rotors are substantially parallel with one another and divergent with respect to the individual axes of the first plurality of rotors.

17. An apparatus for loosening soil, said apparatus comprising:-
a rotor having a plurality of substantially rectangular blades for insertion into the soil, the rotor being mounted for inclined rotation relative to the soil surface; where blades are spaced such that, in use, an uplifting force is applied at spaced intervals to the soil above the inserted blades.
